# EUROPEAN PATENT SPECIFICATION

(11) **EP 1 865 691 B1**
(45) Date of publication and mention of the grant of the patent: **24.06.2009**
(21) Application number: 07109791.9
(22) Date of filing: 06.11.2002
(51) Int. Cl.: H04M 1/22, G06F 3/02, G06F 1/16

(54) **Means for illuminating keypad and device incorporating same**
Mittel zur Tastaturbeleuchtung und Vorrichtung mit solchen Mitteln
Moyens pour illuminer un clavier et dispositif les incorporant

(43) Date of publication of application: 12.12.2007
(62) Divisional of application: 02445146.0
(73) Proprietor: Sony Ericsson Mobile Communications AB, 221 88 Lund (SE)
(72) Inventor: Grip, Martin, 244 65 Furulund (SE)
(74) Representative: Akerman, Marten Lennart

(56) References cited:
- EP-A- 1 094 482
- US-A- 5 975 711
- US-A- 6 040 822

## Description

### Field of the invention

The invention relates to means for illuminating a keypad using a light source arranged in or at a display in a device and directing a part of the light from the light source to the keypad. A light guide is used to direct the light. The invention also relates to a device incorporating the means, such as a mobile telephone.

### State of the art

Today most mobile telephones use electro luminance foils and/or LEDs together with light guides as backlight for both the liquid crystal display (LCD) and/or the keypad. A bright and even backlight under both LCD and the keypad is to prefer.

When using LEDs as backlight for the keypad it is often hard to get an even light distribution underneath the keypad due to too little space for the light guide. Often there is not even room for a light guide so that the light is only spread by the keypad itself. At the top of the keypad where normally the YES and NO buttons or soft keys are located it is very hard to fit in an LED. This often results in poorly lit top keypad buttons.

Another problem is that LEDs can be very expensive depending on colour, and to obtain an even light distribution over the keypad, quite many LEDs may have to be used.

US 5,975,711 discloses integrated display panel assemblies. One embodiment is a cellular phone comprising a light conducting panel illuminating both a liquid crystal display and a keypad.

EP 1 094 482 discloses a light guide for illuminating the display or keyboard of a portable communication device. The light guide comprises a substantially transparent plate-formed element.

US 6,040,822 discloses an illuminated keyboard system. The system comprises a conductor element for conducting a portion of light from a display panel to illuminate a keyboard.

The following two documents form part of the state of the art according to Article 54(3) EPC. Thus, they can only be cited with regard to novelty and not inventive step.

WO 03/047222 discloses a modular liquid crystal display, wherein the light guiding means comprises apertures in the frame, a light guide and microlenses.

EP 1 294 161 discloses an electronic device with a light guide for illuminating the display and keypad of a portable communication device. The light guide comprises a light transmitting substrate located beneath the display and the keypad.

### Summary of the invention

A solution that both improves the light output and evenness and saves money is to utilize the already existing backlight for the display. By controlling the light leakage, i.e. using part of the excessive light, from the LCD module that often is placed just above the keypad in conventional phones, it is possible to use fewer LEDs for the keypad and still obtain an even light distribution even for the top keys of the keypad.

The invention provides means for illumination in a device comprising: a display; a light source for illuminating the display; a keypad to be illuminated and guiding means for guiding part of the light from the light source to the keypad.

The display is mounted in a frame, wherein the guiding means comprises apertures in the frame.

The guiding means comprises a light guide connected to the apertures, wherein the light guide comprises an optical fibre.

In an embodiment, the optical fibre is located adjacent a partly translucent rubber pad shaped to extend into keys of the keypad.

Preferably, each key is provided with a separate optical fibre.

An embodiment of the invention provides a device including such an illumination means.

The display may comprise a LCD unit.

In one embodiment, the light source comprises LEDs and a light guide located beneath or above the LCD unit.

Suitably, the LEDs are located at one or more edges of the light guide.

The device may be a portable telephone, a pager, a communicator, a smart phone or an electronic organiser.

### Brief description of the drawings

The invention will be described in detail below with reference to the accompanying drawings, in which:
Fig. 1 is a perspective view of a mobile telephone with the upper shell removed;
Fig. 2 is a perspective view of a display with apertures in the frame according to the invention;
Fig. 3 is a schematic side view of components of the invention.

### Detailed description of preferred embodiments

The invention will be described in detail with a mobile telephone as an example. The invention is equally applicable in other devices having a display and keypad, such as pagers, communicators, smart phones and electronic organizers.

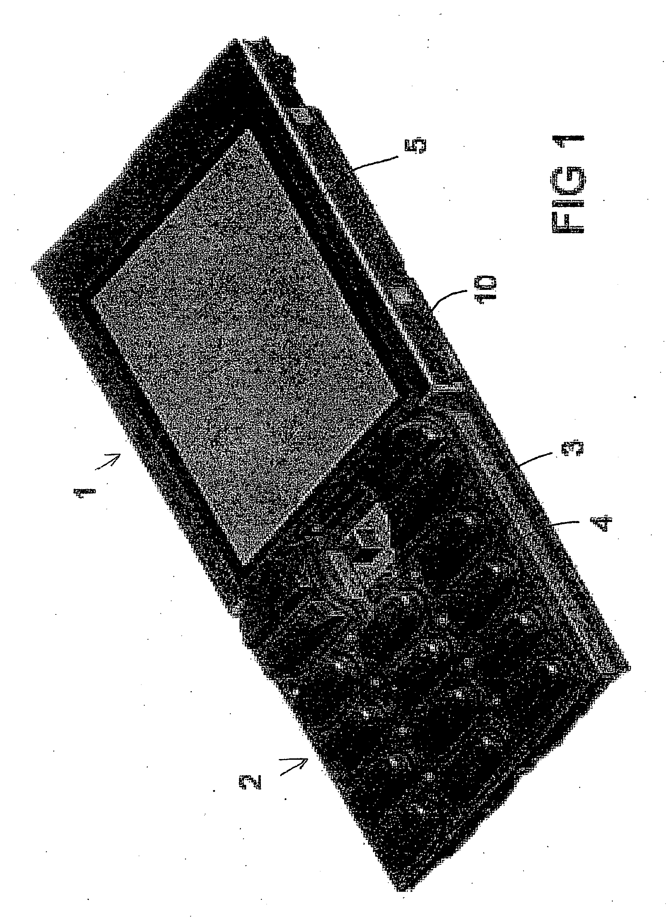

Fig. 1 shows parts of a mobile telephone with the top shell removed. On top of the phone's printed circuit board PCB is placed a display 1 and the interior parts of the keypad 2. As is shown in fig. 1, the keypad comprises a rubber pad 4 with button-like protruding parts 3. The button-like parts are adapted to receive the buttons themselves (not shown). The buttons may be made of plastic, each button fitting snugly over the button-like parts of the rubber pad 4. Usually, the buttons are partly transparent and show a figure or another symbol on the top surface as is conventional.

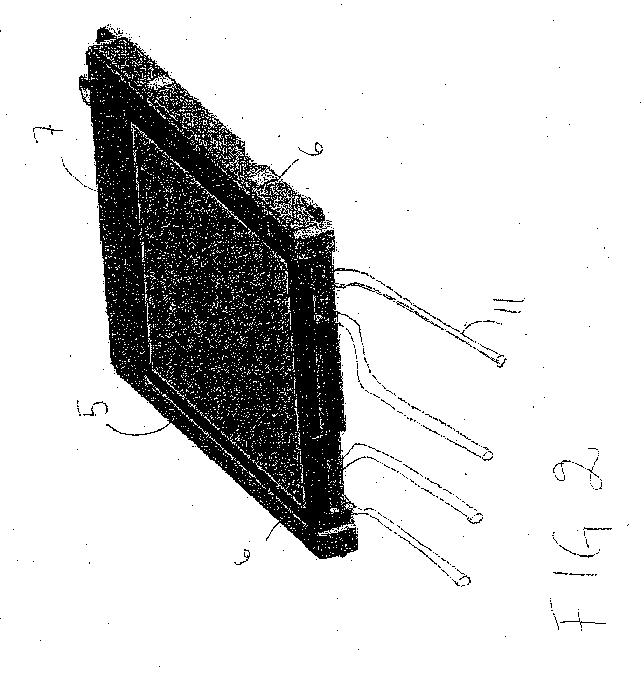

The display portion is also shown in fig. 2. It comprises an LCD module 7 mounted in a carrier or frame 5. The frame protects the LCD unit from physical damage and prevents light from leaking around the sides of the LCD unit. In accordance with the invention apertures or holes 6 are provided in the edge directed to the keypad.

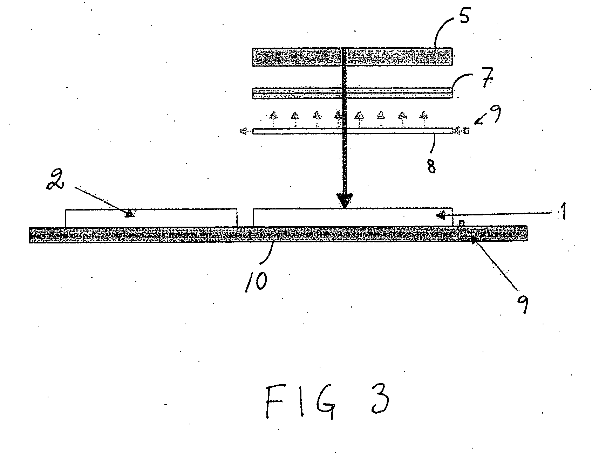

The principle of the invention is illustrated in the more schematic view of fig. 3. The phone PCB 10 carries the keypad 2, the complete display unit and one or more LEDs 9. The components of the display 1 are also shown at the top as a carrier 5, a LCD glass cell 7 comprising liquid crystals located between two glass plates and polarizers, a usually flat light guide 8 and an LED 9.

In an alternative embodiment LEDs are located at the sides of the light guide. The location of the LEDs is not critical as the light will be distributed from any LED located at an edge throughout the light guide and exit at all the sides, where the light is not blocked.

As is conventional the one or more LEDs transmit light into the light guide distributing the light upwards through the LCD module to provide the backlight of the display. The idea of the invention is to design small holes, such as the apertures 6 in fig. 2, in the surrounding carrier which contains the LCD glass cell and the backlight system to let light out in a controlled way.

In another alternative embodiment, the light guide is located on top of the carrier. In this case, the light guide distributes the light downwards through the LCD module which light is reflected to provide the illumination of the display. In other respects the function and design of the invention are identical.

In one embodiment, light is just guided out through the apertures on to the top keypad buttons. In this case there is suitably a larger distance between the top buttons and the display than shown in fig. 1.

In order to focus and direct the light, lenses may be arranged in the apertures. The lenses could be small plastic lenses inserted in the apertures or part of the rubber pad could be extended to cover the apertures. The rubber pad is at least partly translucent to transmit and guide the light.

The rubber pad 4 performs more the function of a light guide. The rubber pad is shaped to extend in front of the apertures 6. Light entering the rubber pad is distributed through the rubber pad 4, particularly in the part nearest the display, and the protruding button-like parts 3 extending into the buttons and assists in illuminating the buttons.

Optical fibres 11 are connected to the apertures 6, as is shown in fig. 2. The optical fibres 11 are located near or adjacent the rubber pad, suitably at the respective row of buttons. The optical fibres may be located on top of the rubber pad, under the front shell (not shown), or below the rubber pad. The individual optical fibre is distributing light sideways as well as lengthways, so that an even light distribution is obtained. Preferably, each button is provided with its own fibre terminating at its respective button.

The illumination of the keypad is preferably completed by further LEDs or an electroluminant foil located under the rubber pad. However, according to the invention, the need for such LEDs is decreased or the size of the electroluminant foil may be decreased, especially at the top keys near the display where there is limited space. Thus, the present invention results in that fewer LEDs are required and/or better light uniformity of the keypad is obtained.

The specific design of the display, the button and the rubber pad may vary without departing from the scope of the invention, which is only limited by the claims below.

## Claims

1. Means for illumination in a device, comprising: a display (1); a light source (9) for illuminating the display (1); a keypad (2) to be illuminated and guiding means (6) for guiding part of the light from the light source (9) to the keypad (2), **characterised in that** the display (1) is mounted in a frame (5), wherein the guiding means comprises apertures (6) in the frame and a light guide (11) connected to the apertures (6), wherein the light guide comprises an optical fibre (11).

2. Means according to claim 1, **characterised in that** the optical fibre (11) is located adjacent a partly translucent rubber pad (4) shaped to extend into keys of the keypad.

3. Means according to claim 2, **characterised in that** each key is provided with a separate optical fibre (11).

4. A device **characterised in that** it includes an illumination means according to any one of the preceding claims.

5. A device according to claim 4, **characterised in that** the display comprises a LCD unit (7).

6. A device according to claim 5, **characterised in that** the light source comprises LEDs (9) and a light guide (8) located beneath the LCD unit (7).

7. A device according to claim 5, **characterised in that** the light source comprises LEDs and a light guide located above the LCD unit.

8. A device according to claim 6 or 7, **characterised in that** the LEDs are located at one or more edges of the light guide (8).

9. A device according to any one of claims 4 to 8, **characterised in that** the device is a portable telephone, a pager, a communicator, a smart phone or an electronic organiser.

## Patentansprüche

1. Vorrichtung zur Beleuchtung in einem Gerät, mit:
einer Anzeige (1) ;
einer Lichtquelle (9) zum Beleuchten der Anzeige (1) ;
einem zu beleuchtenden Tastenblock (2) und
einerFührungsvorrichtung (6) zum Führen einesTeils des Lichtes von der Lichtquelle (9) zu dem Tastenblock (2),
**gekennzeichnet dadurch, dass**
die Anzeige (1) in einem Rahmen (5) montiert ist, wobei die Führungsvorrichtung Öffnungen (6) in dem Rahmen und einen Lichtleiter (11) umfasst, der mit den Öffnungen (6) verbunden ist, wobei der Lichtleiter eine optische Faser (11) umfasst.

2. Vorrichtung nach Anspruch 1, **dadurch gekennzeichnet, dass** die optische Faser (11) benachbart zu einem teilweise durchsichtigen Gummiblock (4) lokalisiert ist, der geformt ist, um sich in die Tasten des Tastenblocks zu erstrecken.

3. Vorrichtung nach Anspruch 2, **dadurch gekennzeichnet, dass** jede Taste mit einer getrennten optischen Faser (11) bereitgestellt ist.

4. Gerät, **dadurch gekennzeichnet, dass** dieses eine Beleuchtungsvorrichtung nach einem der vorangehenden Ansprüche umfasst.

5. Gerät nach Anspruch 4, **dadurch gekennzeichnet, dass** die Anzeige eine LCD-Einheit (7) umfasst.

6. Gerät nach Anspruch 5, **dadurch gekennzeichnet, dass** die Lichtquelle LEDs (9) und einen Lichtleiter (8) umfasst, der unter der LCD-Einheit (7) angeordnet ist.

7. Gerät nach Anspruch 5, **dadurch gekennzeichnet, dass** die Lichtquelle LEDs und einen Lichtleiter umfasst, der über der LCD-Einheit angeordnet ist.

8. Gerät nach Anspruch 6 oder7, **dadurch gekennzeichnet, dass** die LEDs an einer oder mehrerer Kanten des Lichtleiters (8) lokalisiert sind.

9. Gerät nach einem der Ansprüche 4 bis 8, **dadurch gekennzeichnet, dass** das Gerät ein tragbares Telefon, ein Funkrufempfänger(Pager), ein Kommunikator, ein Smart-Phone oder ein elektronischer Organisator ist.

## Revendications

1. Moyen pour l'éclairage dans un dispositif, comportant : un afficheur (1), une source de lumière (9) destinée à éclairer l'afficheur (1), un bloc de touches (2) devant être éclairé et un moyen de guidage (6) destiné à guider une partie de la lumière provenant de la source de lumière (9) vers le bloc de touches (2), **caractérisé en ce que** l'afficheur (1) est monté dans un bâti (5), dans lequel le moyen de guidage présente des ouvertures (6) dans le bâti et un guide de lumière (11) relié aux ouvertures (6), le guide de lumière comprenant une fibre optique (11).

2. Moyen selon la revendication 1, **caractérisé en ce que** la fibre optique (11) est placée de façon à être adjacente à une semelle (4) de caoutchouc partiellement translucide configurée pour pénétrer dans des touches du bloc de touches.

3. Moyen selon la revendication 2, **caractérisé en ce que** chaque touche est pourvue d'une fibre optique séparée (11).

4. Dispositif **caractérisé en ce qu'**il comprend un moyen d'éclairage selon l'une quelconque des revendications précédentes.

5. Dispositif selon la revendication 4, **caractérisé en ce que** l'afficheur comporte une unité (7) d'affichage à cristaux liquides LCD.

6. Dispositif selon la revendication 5, **caractérisé en ce que** la source de lumière comporte des DEL (9) et un guide de lumière (8) placés en dessous de l'unité à LCD (7).

7. Dispositif selon la revendication 5, **caractérisé en ce que** la source de lumière comprend des DEL et un guide de lumière placés au-dessus de l'unité à LCD.

8. Dispositif selon la revendication 6. ou 7, **caractérisé en ce que** les DEL sont placées à un ou plusieurs bords du guide de lumière (8).

9. Dispositif selon l'une quelconque des revendications 4 à 8, lequel dispositif est **caractérisé en ce qu'**il s'agit d'un téléphone portable, d'un dispositif de radiomessagerie, d'un dispositif de communication, d'un téléphone intelligent ou d'un organiseur électronique.
